# EUROPÄISCHE PATENTSCHRIFT

(11) **EP 4 424 436 B1**
(45) Veröffentlichungstag und Bekanntmachung des Hinweises auf die Patenterteilung: **26.08.2026**
(21) Anmeldenummer: 24000024.0
(22) Anmeldetag: 23.02.2024
(51) Int. Cl.: B21F 11/00, B23D 29/02

(54) **VORRICHTUNG ZUM BEARBEITEN VON MINDESTENS EINEM AXIAL GEZOGENEN DRAHT**
DEVICE FOR MACHINING AT LEAST ONE AXIALLY DRAWN WIRE
DISPOSITIF POUR USINER AU MOINS UN FIL ÉTIRÉ AXIALEMENT

(30) Priorität: 28.02.2023 DE 202023000471 U
(43) Veröffentlichungstag der Anmeldung: 04.09.2024
(73) Patentinhaber: Network Quality Management GmbH, 5412 Puch bei Hallein (AT)
(72) Erfinder: Strasser-Stöckl, Markus, 5412 Puch bei Hallein (AT)
(74) Vertreter: Witzany, Manfred

(56) Entgegenhaltungen:
- EP-B1- 0 696 438
- EP-B1- 3 222 379
- AU-A- 3 214 684
- DE-A1- 3 224 989

## Beschreibung

Die Erfindung betrifft mindestens einen gezogenen Draht und Mittel zu dessen Bearbeitung, wobei insbesondere der Draht abgelängt werden soll. Dabei ist der mindestens eine Draht in einer Laufrichtung bewegt und wird durch mindestens eine Schere geführt, welche Klingen aufweist. Mindestens eine dieser Klingen ist von mindestens einem Motor um eine Achse drehbar, um auf diese Weise die gewünschte Schnittbewegung auszuführen.

Aus der AT 520588 B1 ist eine Vorrichtung bekannt. Diese weist zwei, den Draht einschließende Rollen auf, an denen jeweils eine Klinge vorgesehen ist, um den zwischen den Rollen durchgeführten Draht abzulängen. Dabei bilden Achsen der Rollen mit dem Laufweg des Drahtes einen Winkel von exakt 90°. Diese Anordnung ist für massive Drähte, die man auch als Stäbe bezeichnen könnte, gut geeignet, um ausreichend qualitativ hochwertige Schnittergebnisse zu erzielen. Bei weichen Drähten, insbesondere solchen, die aus Litzen, Feinlitzen oder Feinstlitzen bestehen, ergibt sich jedoch durch die Schneidgeometrie ein unsauberes Schnittbild. Dabei besteht zusätzlich die Gefahr, dass sich der Draht zwischen den Klingen der Schere verklemmt, was dann zu Produktionsausfällen führen könnte.

Aus der EP 0 696 438 B1, welche die Basis für den Oberbegriff des Anspruchs 1 bildet, ist eine Vorrichtung zum Trennen von Körpern mit nicht kreisrundem Querschnitt bekannt. Diese besteht aus zwei Zangen, die den zu durchtrennenden Körper erfassen und durch eine gegensinnige Drehbewegung abscheren.

Aus der AU 32146 84 A ist eine elektrische Schere bekannt. Diese weist eine feststehende und eine motorisch angetriebene, bewegliche Klinge auf. Zwischen diesen Klingen kann blattförmiges Material wie beispielsweise Papier geschnitten werden. Diese Druckschrift macht jedoch keinerlei Aussagen, ob das zu verarbeitende Schnittgut in eine Richtung befördert wird.

Aus der EP 3 222 379 B1 ist eine Vorrichtung zum Ablängen von Schrauben bzw. Gewindestangen bekannt. Diese Vorrichtung weist zwei Schneidbacken auf, die randseitige Gewindehalbbohrungen aufweisen. In diesen Gewindehalbbohrungen wird die Schraube fixiert und anschließend durch eine Scherungsbewegung abgeschert. Dabei verhindern die in den Backen vorgesehenen Gewinde jegliche Relativbewegung der Schraube.

Aus der DE 32 24 989 A1 ist eine Vorrichtung zum Schneiden von strangförmigem Gut bekannt. Diese besteht aus einer Zange mit einer festen und einer drehbeweglichen Backe. Das strangförmige Gut wird dabei zwischen die beiden Backen eingeführt und durch eine Schwenkbewegung der beweglichen Backe abgeschert.

Der Erfindung liegt die Aufgabe zugrunde, eine Vorrichtung der eingangs genannten Art zu schaffen, welche auch bei flexiblen Drähten ein sauberes Schnittbild bei gleichzeitig hoher Ausfallsicherheit gewährleistet.

Diese Aufgabe wird mit den folgenden Merkmalen gelöst.

Eine erfindungsgemäße Vorrichtung weist mindestens einen axial gezogenen Draht und eine Vorrichtung zu dessen Bearbeitung auf. Dabei ist jede beliebige Art von Bearbeitung zu verstehen, durch die der mindestens eine Draht in irgendeiner Weise verändert wird. Im Rahmen dieser Bearbeitung wird der mindestens eine Draht durchtrennt, so dass ein Ablängen eine Form der Bearbeitung des mindestens einen Drahtes ist, die auf jeden Fall durchgeführt wird. Hierzu weist die Vorrichtung mindestens eine Schere auf, welche in einem Laufweg des mindestens einen Drahtes vorgesehen ist. Diese mindestens eine Schere hat die Aufgabe, den mindestens einen Draht zu durchtrennen. Dabei weist die mindestens eine Schere Klingen auf, von denen mindestens eine durch mindestens einen Motor um eine Achse drehbar ist. Die mindestens eine andere Klinge kann je nach Anforderungen feststehend oder ebenfalls drehbeweglich sein, wobei in letzterem Fall insbesondere an eine gegenläufige Bewegung der Klingen gedacht ist. Um den mindestens einen Draht während seiner axialen Bewegung sauber durchtrennen zu können, ist es wichtig, dass die Schnittführung rasch erfolgt, wobei der mindestens eine Draht möglichst eine kurze Verweilzeit an der mindestens einen Schere aufweisen soll. Hierzu ist mindestens eine der Klingen, vorzugsweise mehrere Klingen V-förmig ausgebildet. Als "V-förmig" ist hier und im Folgenden jede Form zu verstehen, die von einem Punkt auseinanderstrebende Flanken aufweist. Diese Flanken können geradlinig, beliebig gekrümmt und/oder winkelig ausgebildet sein und sollen mathematisch eine stetige, parametrisierbare Kurve bilden. Der genannte Punkt kann Teil der Flanken oder ein gedachter Punkt sein, der durch Extrapolation der Flanken definiert ist. Die Achse ist dabei in einer Schnittebene der mindestens einen Schere vom mindestens einen Draht beabstandet. Auf diese Weise wird sichergestellt, dass die drehbewegliche Klinge im Bereich des Drahtes eine von der Rotationsgeschwindigkeit dieser Klinge abhängige Schnittgeschwindigkeit aufweist. Vorzugsweise wird dabei der mindestens eine Draht nahe dieses gedachten Schnittpunktes geführt, da dort die V-förmige Klinge die optimale Schnittwirkung besitzt. Auf diese Weise ergibt sich ein sauberer Schnitt des mindestens einen Drahtes während er sich axial bewegt. Die Schnittqualität ist dabei im Wesentlichen unabhängig von der Biegsamkeit des mindestens einen Drahtes, so dass Feinstlitzendrähte, Litzendrähte und Vollmaterial gleichermaßen gut geschnitten werden können. Optimalerweise ist die Achse parallel zum Laufweg des mindestens einen Drahtes ausgerichtet, wobei diese Parallelität nur im Bereich der Schnittebene relevant ist. Ausreichend gute Schnittergebnisse werden aber in einem Winkelbereich zwischen beiden von höchstens 30° erzielt. Zur Erzielung der gewünschten V-Form der mindestens einen Klinge könnte diese aus zwei getrennten Stücken erstellt sein, was deren Herstellung und insbesondere Nachschleifen erheblich vereinfachen würde. Es hat sich jedoch herausgestellt, dass dies kontraproduktiv ist, da eine derartige V-förmige Klinge die Tendenz hat, den mindestens einen Draht einzuklemmen. Deshalb ist erfindungsgemäß die mindestens eine V-förmige Klinge einstückig ausgebildet, wodurch dieses Problem beseitigt ist. Allerdings geht dies auf Kosten einer komplexeren Herstellung und eines schwierigeren Nachschleifens. Um die mindestens eine einstückige V-förmige Klinge schleifen zu können, ist diese in einem Übergangsbereich zwischen Flanken der V-Form gerundet. Damit weicht die V-förmige Klinge in diesem Übergangsbereich geringfügig von der idealen V-Form ab, wodurch der Schnittpunkt der Flanken außerhalb dieser Flanken liegt und folglich rein virtuell ist.

Für die Rundung hat sich ein Radius zwischen 0,3 mm und 1 mm bewährt. Vorzugsweise wird der Radius zwischen 0,3 mm und 0,7 mm gewählt. Bei zu kleinem Radius wird es extrem schwierig, die mindestens eine V-förmige Klinge in diesem Bereich zu schleifen. Bei einem größeren Radius ergibt sich dagegen das Problem, dass die Schnittleistung der mindestens einen Schere durch die dann erhebliche Abweichung von der idealen V-Form leidet.

Um insbesondere auch Metalldrähte, wie beispielsweise Kupfer schneiden zu können, ist die mindestens eine Klinge gehärtet. Dies erhöht insbesondere auch die Standzeit der mindestens einen Klinge erheblich, auch wenn weichere Materialien geschnitten werden.

Für die Oberflächenhärte der mindestens einen Klinge hat sich ein Wert zwischen 58 und 64 HB, vorzugsweise zwischen 60 und 62 HB bewährt. Kleinere Härten haben den Nachteil einer deutlich verringerten Standzeit der mindestens einen Klinge. Bei größeren Härten wird dagegen insbesondere das Schleifen der mindestens einen Klinge im gerundeten Übergangsbereich deutlich schwieriger.

Für den Antrieb der mindestens einen Klinge hat sich mindestens ein Elektromotor bewährt. Dieser kann mit sehr kurzer Latenzzeit auch hohe Geschwindigkeiten beschleunigen, so dass sich eine gute Steuerbarkeit der mindestens einen Schere ergibt.

Vorzugsweise wird als Elektromotor mindestens ein bürstenloser Gleichstrommotor eingesetzt, der sich durch ein hohes Drehmoment über den gesamten Drehzahlbereich auszeichnet. Außerdem ergibt sich auf diese Weise ein verschleißarmer Betrieb der mindestens einen Schere.

Für die Drehgeschwindigkeit der mindestens einen beweglichen Klinge hat sich ein Wert zwischen 5 U/s und 20 U/s bewährt. Vorzugsweise liegt dieser Wert im Bereich um 10 U/s. Dieser Wert lässt sich mit handelsüblichen, bürstenlosen Gleichstrommotoren problemlos erreichen. Sehr viel geringere Drehgeschwindigkeiten führen aber zu einem deutlich schlechteren Schnittergebnis.

Vorzugsweise ist der mindestens einen Schere mindestens eine Verdrillvorrichtung vorgeordnet, so dass auf diese Weise verdrillte Drähte geschnitten werden können. Bei diesen ist ein sauberer Schnitt besonders wichtig, da in diesem Fall die Einzeldrähte aufgrund der Verdrillung stets in einem gewissen Winkel den Klingen der mindestens einen Schere zugeführt werden. Dies kann zu Verklemmungen bzw. Verquetschungen des mindestens einen Drahtes führen. Deshalb ist es in diesem Fall besonders wichtig, eine besonders zuverlässige Schnittvorrichtung zu verwenden.

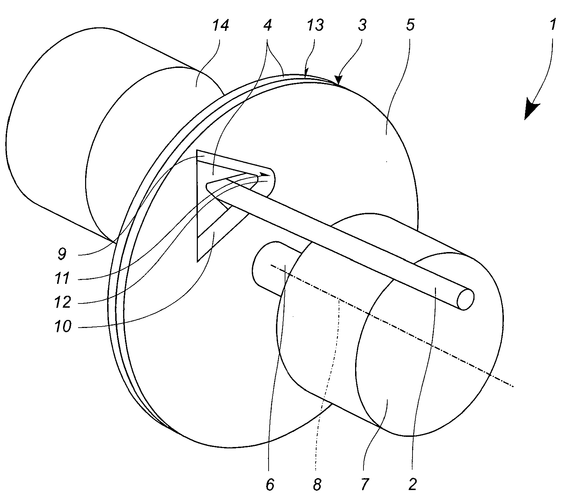

Der Erfindungsgegenstand wird beispielhaft anhand der Zeichnung erläutert, ohne den Schutzumfang zu beschränken.

Die einzige Figur zeigt eine räumliche Prinzipdarstellung einer Vorrichtung 1 zum Bearbeiten eines Drahtes 2. Die Vorrichtung 1 weist dabei eine Schere 3 auf, welche von zwei Klingen 4, 5 gebildet ist. Dabei ist die Klinge 4 feststehend, während die Klinge 5 drehbar abgestützt ist. Die Klinge 5 ist auf einer Welle 6 abgestützt, die von einem Elektromotor 7 zur Drehung antreibbar ist. Dieser Elektromotor 7 ist als bürstenloser Gleichstrommotor ausgebildet. Er dreht die Klinge 5 um eine Achse 8, welche mit einer Achse der Welle 6 übereinstimmt.

Die Klingen 4, 5 sind V-förmig ausgebildet und weisen Flanken 9, 10 auf, welche geradlinig und im spitzen Winkel zueinander angestellt sind. In einem Übergangsbereich 11 der Flanken 9, 10 weist die Klinge 4, 5 eine Rundung 12 mit einem Rundungsradius von 0,5 mm auf.

Der Draht 2 ist dabei so geführt, dass er bei einer Drehung der Klinge 5 in diesem Übergangsbereich 11 geführt ist, um diesen durch die Klingen 4, 5 zu durchtrennen. Die Klingen 4, 5 sind einseitig geschliffen, so dass sie entlang einer Schnittebene 13 problemlos aneinander vorbei gleiten können.

Der Schere 3 ist eine lediglich schematisch angedeutete Verdrillvorrichtung 14 vorgeordnet, welche die Drähte 2 miteinander verdrillen kann.

### Bezugszeichenliste

- 1: Vorrichtung
- 2: Draht
- 3: Schere
- 4: Klinge
- 5: Klinge
- 6: Welle
- 7: Elektromotor
- 8: Achse
- 9: Flanke
- 10: Flanke
- 11: Übergangsbereich
- 12: Rundung
- 13: Schnittebene
- 14: Verdrillvorrichtung

## Patentansprüche

1. Vorrichtung, welche mindestens einen axial gezogenen Draht (2) und Mittel zu dessen Bearbeitung aufweist, wobei die Mittel zur Bearbeitung mindestens einen Motor (7) und mindestens eine Schere (3) aufweisen, welche in einer Laufrichtung des mindestens einen Drahtes (2) vorgesehen ist, um diesen zu durchtrennen, wobei die mindestens eine Schere (3) Klingen (4, 5) aufweist, von denen mindestens eine vom mindestens einem Motor (7) zur Drehung angetrieben ist, wobei mindestens eine der Klingen (4, 5) V-förmig in einer Schnittebene (13) der mindestens einen Schere (3) vom mindestens einen Draht (2) beabstandet ist und mit dem Laufweg des mindestens einen Drahtes (2) einen Winkel von höchstens 30° einschließt, **dadurch gekennzeichnet, dass** die mindestens eine V-förmige Klinge (4, 5) einstückig ist, und dass die mindestens eine V-förmige Klinge (4, 5) in einem Übergangsbereich (11) zwischen Flanken (9, 10) der V-Form gerundet ist.

2. Vorrichtung nach Anspruch 1, **dadurch gekennzeichnet, dass** die Rundung (12) einen Radius zwischen 0,3 mm und 1 mm, vorzugsweise zwischen 0,3 mm und 0,7 mm aufweist.

3. Vorrichtung nach Anspruch 1 oder 2, **dadurch gekennzeichnet, dass** mindestens eine der Klingen (4, 5) gehärtet ist.

4. Vorrichtung nach Anspruch 3, **dadurch gekennzeichnet, dass** die mindestens eine gehärtete Klinge (4, 5) eine Oberflächenhärte zwischen 58 HB und 64 HB, vorzugsweise zwischen 60 HB und 62 HB aufweist.

5. Vorrichtung nach mindestens einem der Ansprüche 1 bis 4, **dadurch gekennzeichnet, dass** mindestens eine der Klingen (4, 5) von mindestens einem Elektromotor (7) angetrieben ist.

6. Vorrichtung nach Anspruch 5, **dadurch gekennzeichnet, dass** der mindestens eine Elektromotor (7) ein bürstenloser Gleichstrommotor ist.

7. Vorrichtung nach mindestens einem der Ansprüche 1 bis 6, **dadurch gekennzeichnet, dass** der mindestens eine Motor (7) derart konfiguriert ist, dass die mindestens eine bewegliche Klinge (4, 5) während des Schnittvorgangs mit einer maximalen Drehgeschwindigkeit zwischen 5 U/s und 20 U/s gedreht wird.

8. Vorrichtung nach mindestens einem der Ansprüche 1 bis 7, **dadurch gekennzeichnet, dass** die Vorrichtung (1) mindestens eine Verdrillvorrichtung (14) umfasst, welche der mindestens einen Schere (3) vorgeordnet ist.

## Claims

1. Device comprising at least one axially drawn wire (2) and means for processing the wire, wherein the processing means comprise at least one motor (7) and at least one pair of scissors (3), which is provided in a direction of travel of the at least one wire (2) in order to sever it, wherein the at least one pair of scissors (3) comprises blades (4, 5), at least one of which is driven to rotate by the at least one motor (7), wherein at least one of the blades (4, 5) is V-shaped in a cutting plane (13) of the at least one pair of scissors (3), is spaced apart from the at least one wire (2), and encloses an angle of at most 30° with the travel path of the at least one wire (2), **characterized in that** the at least one V-shaped blade (4, 5) is of one-piece construction, and **in that** the at least one V-shaped blade (4, 5) is rounded in a transition region (11) between the flanks (9, 10) of the V-shape.

2. Device according to claim 1, **characterized in that** the rounding (12) has a radius between 0.3 mm and 1 mm, preferably between 0.3 mm and 0.7 mm.

3. Device according to claim 1 or 2, **characterized in that** at least one of the blades (4, 5) is hardened.

4. Device according to claim 3, **characterized in that** the at least one hardened blade (4, 5) has a surface hardness between 58 HB and 64 HB, preferably between 60 HB and 62 HB.

5. Device according to at least one of claims 1 to 4, **characterized in that** at least one of the blades (4, 5) is driven by at least one electric motor (7).

6. Device according to claim 5, **characterized in that** the at least one electric motor (7) is a brushless DC motor.

7. Device according to at least one of claims 1 to 6, **characterized in that** the at least one motor (7) is configured such that the at least one movable blade (4, 5) is rotated during the cutting process at a maximum rotational speed between 5 revolutions per second and 20 revolutions per second.

8. Device according to at least one of claims 1 to 7, **characterized in that** the device (1) comprises at least one twisting device (14), which is arranged upstream of the at least one pair of scissors (3).

## Revendications

1. Dispositif, qui comporte au moins un fil métallique (2) étiré axialement et des moyens de traitement de celui-ci, les moyens de traitement comportant au moins un moteur (7) et au moins un ciseau (3) qui est prévu dans un sens de défilement de l'au moins un fil métallique (2) pour le couper, l'au moins un ciseau (3) comportant des lames (4, 5) dont au moins une est entraînée en rotation par l'au moins un moteur (7), au moins une des lames (4, 5) étant espacée en forme de V de l'au moins un fil métallique (2) dans un plan de coupe (13) de l'au moins un ciseau (3) et formant un angle de 30° au maximum avec le trajet de l'au moins un fil métallique (2), **caractérisé en ce que** l'au moins une lame (4, 5) en V est d'un seul tenant, et que l'au moins une lame (4, 5) en V est arrondie dans une zone de transition (11) entre des flancs (9, 10) de la forme en V.

2. Dispositif selon la revendication 1, **caractérisé en ce que** l'arrondi (12) comporte un rayon entre 0,3 mm et 1 mm, de préférence entre 0,3 mm et 0,7 mm.

3. Dispositif selon la revendication 1 ou 2, **caractérisé en ce qu'**au moins une des lames (4, 5) est trempée.

4. Dispositif selon la revendication 3, **caractérisé en ce que** l'au moins une lame (4, 5) trempée présente une dureté superficielle entre 58 HB et 64 HB, de préférence entre 60 HB et 62 HB.

5. Dispositif selon au moins l'une des revendications 1 à 4, **caractérisé en ce qu'**au moins une des lames (4, 5) est entraînée par au moins un moteur électrique (7).

6. Dispositif selon la revendication 5, **caractérisé en ce que** l'au moins un moteur électrique (7) est un moteur à courant continu sans balai.

7. Dispositif selon au moins l'une des revendications 1 à 6, **caractérisé en ce que** l'au moins un moteur (7) est configuré de telle manière que l'au moins une lame (4, 5) mobile tourne pendant le processus de coupe à une vitesse de rotation maximale entre 5 tr/s et 20 tr/s.

8. Dispositif selon au moins l'une des revendications 1 à 7, **caractérisé en ce que** le dispositif (1) comprend au moins un dispositif de torsion (14) qui est disposé en amont de l'au moins un ciseau (3).
